# EUROPEAN PATENT APPLICATION

(11) **EP 4 510 226 A1**
(43) Date of publication of application: **19.02.2025**
(21) Application number: 23924474.2
(22) Date of filing: 14.11.2023
(51) Int. Cl.: H01M 4/36, H01M 4/62, H01M 4/58

(54) **COMPOSITE SODIUM FERRIC SULFATE POSITIVE ELECTRODE MATERIAL AND PREPARATION METHOD THEREFOR, POSITIVE ELECTRODE, AND SODIUM ION BATTERY**

(30) Priority: 25.06.2023 CN 202310755581
(71) Applicant: Jiangsu Pylon Battery Co., Ltd., Yangzhou City, Jiangsu 211400 (CN)
(72) Inventor: LI, Xiang, Yangzhou, Jiangsu 211400 (CN); YANG, Qingheng, Yangzhou, Jiangsu 211400 (CN); WANG, Jian, Yangzhou, Jiangsu 211400 (CN); ZHANG, Weiqing, Yangzhou, Jiangsu 211400 (CN); YANG, Cheng, Yangzhou, Jiangsu 211400 (CN); CHEN, Keju, Yangzhou, Jiangsu 211400 (CN); ZHANG, Ningning, Yangzhou, Jiangsu 211400 (CN)
(74) Representative: Hautier IP - MC/EP
(86) International application number: PCT/CN2023/131629
(87) International publication number: WO 2025/000822

(57) **Abstract**

The present invention relates to the technical field of sodium-battery materials, and discloses a positive electrode material of composite sodium ferric sulfate and a preparation method therefor, a positive electrode and a sodium-ion battery. For the positive electrode material of composite sodium ferric sulfate, particles of the positive electrode material include a sodium ferric sulfate matrix, a three-dimensional conductive network embedded into the sodium ferric sulfate matrix and a conductive coating layer coated outside the sodium ferric sulfate matrix; and the three-dimensional conductive network and the conductive coating layer are both formed from PEDOT. The preparation method includes: mixing PSS, EDOT, sodium sulfate, ferrous sulfate and an oxidant as an initiator in an aqueous solution and making the same fully react to render a precursor solution; drying the precursor solution; and then carrying out heat treatment to render the positive electrode material of composite sodium ferric sulfate. The positive electrode is prepared by the above positive electrode material. The sodium-ion battery includes the above positive electrode. The positive electrode material has good conductivity, capacity, rate and interface stability.

## Description

### CROSS-REFERENCE TO RELATED APPLICATION

The present invention claims the priority to the Chinese patent application with the filing No. 202310755581.9 filed with the China National Intellectual Property Administration on June 25, 2023 and entitled "POSITIVE ELECTRODE MATERIAL OF COMPOSITE SODIUM FERRIC SULFATE AND PREPARATION METHOD THEREFOR, POSITIVE ELECTRODE AND SODIUM-ION BATTERY", the contents of which are incorporated herein by reference in entirety.

### TECHNICAL FIELD

The present invention relates to the technical field of sodium-battery materials, and specifically to a positive electrode material of composite sodium ferric sulfate and a preparation method therefor, a positive electrode and a sodium-ion battery.

### BACKGROUND ART

Currently, positive electrode materials of sodium-ion batteries are mainly classified into three types, namely layered oxides, polyanionic materials and Prussian white derivative materials. In the above, the polyanionic materials, due to the fact that polyanionic polyhedrons and polyhedrons of transition metal ions form a three-dimensional network structure through connection of strong covalent bonds, have excellent structural stability and long-cycle potential, and are thus of great concern.

Iron-based polyanionic positive electrode material has rapid development as ferric iron is rich and environmentally friendly. In the above, a positive electrode material of iron-based pyrophosphate has a low working potential (~3.0 V vs. Na⁺/Na) and low energy density. While an iron-based sulfate material has a high working potential (~3.7 V vs. Na⁺/Na), can bring higher energy density, and thus attracts attention.

However, such type of materials have a high working voltage, and an upper limit of a charging voltage exceeds 4.2 V vs. Na⁺/Na, thus easily causing oxidization and decomposition of an electrolytic solution at the positive electrode. In addition, such iron-based sulfate generally has poor conductivity, thus leading to low sodium storage capacity and poor rate performance. Meanwhile, when such material is easy to absorb water and oxidize when contacting air, thus causing failure of the material. A general solution is to improve conductivity and hydrophobicity of the iron-based sulfate through a composite carbon-based material.

However, as the working potential of the iron-based sulfate is high, the upper limit of the charging voltage is generally higher than 4.2 V vs. Na⁺/Na, and the electrolytic solution is easy to be oxidized and decomposed on the surface of the iron-based sulfate under this voltage. The oxidation and decomposition of the electrolytic solution under a high voltage cannot be well inhibited only by a method of adopting or coating iron-based sodium sulfate with the carbon-based material. In addition, as the iron-based sulfate is decomposed at a temperature higher than 500 °C and cannot be treated by a conventional high-temperature carbon-coating means, a carbon nano-tube material is generally used for compounding, so that the carbon nano-tubes are used in a large amount, and the cost is high.

Therefore, it is of great significance to the sodium ferric sulfate material to develop a material which improves both the oxidation stability under a high voltage and the conductivity of the material itself.

In the above, a conductive polymer material itself has good conductivity, and meanwhile has good chemical stability as a polymer material. Therefore, it is often used as a coating material for a battery material, to improve the conductivity and interface stability of the material. However, when the conductive polymer is used for coating, it is generally necessary to first prepare the battery material, then dissolve polymer monomer in an organic solvent, mix the same with the battery material, and then perform polymerization. The conductive polymer usually can only be coated on a surface of the material, but cannot form a crosslinked three-dimensional conductive network in a bulk. Moreover, synthesis steps are complex, and an organic solvent needs to be used, which is harmful to the environment and health. Therefore, it is desirable to develop a suitable method to simplify process steps and reduce hazards to the environment and health while further improving conductivity.

In view of this, the present invention is specifically proposed.

### SUMMARY

The present invention aims at providing a positive electrode material of composite sodium ferric sulfate and a preparation method therefor, a positive electrode and a sodium-ion battery.

The present invention is implemented as follows.

In the first aspect, the present invention provides a positive electrode material of composite sodium ferric sulfate, wherein particles of the positive electrode material include a sodium ferric sulfate matrix, a three-dimensional conductive network embedded into the sodium ferric sulfate matrix and a conductive coating layer coated outside the sodium ferric sulfate matrix; and the three-dimensional conductive network and the conductive coating layer are both formed from PEDOT.

In an optional embodiment, a mass ratio of the sodium ferric sulfate matrix to the PEDOT is 100:1-10.

In the second aspect, the present invention provides a preparation method for a positive electrode material of composite sodium ferric sulfate, including:
mixing PSS, EDOT, sodium sulfate, ferrous sulfate and an oxidant as an initiator in an aqueous solution and making the same fully react to render a precursor solution;
drying the precursor solution to render a PEDOT-PSS composite sodium ferric sulfate precursor; and
carrying out heat treatment on the sodium ferric sulfate precursor at 300-450 °C for 6-24 h in an inert atmosphere, to render the positive electrode material of composite sodium ferric sulfate.

In an optional embodiment, a method of mixing and reacting the PSS, the EDOT, the sodium sulfate, the ferrous sulfate and the oxidant as the initiator includes:
firstly adding the PSS, deionized water and the EDOT into a reaction vessel, and fully stirring and uniformly dispersing the same; and
then adding the sodium sulfate, the ferrous sulfate and the oxidant into the reaction solution, and carrying out reaction under continuous stirring.

In an optional embodiment, the oxidant includes at least one of ferric sulfate, sodium persulfate, ammonium persulfate, hydrogen peroxide and oxygen; and
preferably, the oxidant is iron sulfate and sodium persulfate.

In an optional embodiment, a feeding mole ratio of the sodium sulfate to the ferrous sulfate is 1:1.5-2.5; and
optionally, a feeding mass ratio of the PSS to the EDOT is 10:1-5.

In an optional embodiment, feeding amounts are as follows: a total amount of the PSS and the EDOT is 31-314 parts, the sodium sulfate is 1000 parts, and the ferrous sulfate is 1605-2675 parts, in parts by weight;
optionally, the oxidant is 1-200 parts; and
optionally, the deionized water is 2500-100000 parts.

In an optional embodiment, a drying method is spray drying.

In the third aspect, the present invention provides a positive electrode, prepared using the positive electrode material according to the preceding embodiments, or the positive electrode material prepared by the preparation method according to any one of the preceding embodiments.

In the fourth aspect, the present invention provides a sodium-ion battery, including the positive electrode according to the preceding embodiments.

The present invention has the following beneficial effects.

For the positive electrode material of composite sodium ferric sulfate provided by the present invention, the conductive network formed by the PEDOT is embedded into the sodium ferric sulfate matrix and coated on the surface of the sodium ferric sulfate matrix, which can improve the conductivity, capacity and rate of the positive electrode material of sodium ferric sulfate. Moreover, as the PEDOT has better chemical stability and forms a coating layer on the surface of the sodium ferric sulfate, the interface stability of the positive electrode material of sodium ferric sulfate can be improved.

In the preparation method provided by the examples of the present invention, the PSS (sodium polystyrene sulfonate) is introduced in the preparation process, through interaction of the ionic bonds with the PEDOT, the solubility of the PEDOT in water is improved, and the PEDOT can form a uniform dispersed aqueous solution with sodium sulfate and ferrous sulfate, so that the PEDOT-based three-dimensional conductive network structure can be formed inside the particles of the positive electrode material of composite sodium ferric sulfate finally obtained after the heat treatment, instead of merely making the PEDOT to be coated on the surface of the sodium ferric sulfate particles. During the heat treatment, sulfonic acid groups of the PSS are decomposed, which causes the ionic bonds between the PEDOT and the PSS to disappear, thus further improving the conductivity of the final polymer.

### BRIEF DESCRIPTION OF DRAWINGS

In order to more clearly illustrate the technical solutions of examples of the present invention, the drawings which need to be used in the examples will be briefly introduced below. It should be understood that the drawing merely shows some examples of the present invention, and thus should not be considered as limitation to the scope. Those ordinarily skilled in the art still could obtain other relevant drawings according to these drawings, without using inventive efforts.
FIG. 1 shows a sodium ferric sulfate material doped and coated with a PEDOT-based conductive polymer; and
FIG. 2 shows an ordinary sodium ferric sulfate material without doping and coating.

### DETAILED DESCRIPTION OF EMBODIMENTS

In order to make the objectives, technical solutions and advantages of the examples of the present invention clearer, the technical solutions in the examples of the present invention will be clearly and completely described below. Examples, for which no specific conditions are specified, are performed according to conventional conditions or conditions recommended by the manufactures. Where manufacturers of reagents or apparatuses used are not specified, they are conventional products commercially available.

A positive electrode material of composite sodium ferric sulfate and a preparation method therefor, a positive electrode, and a sodium-ion battery provided by the examples of the present invention are specifically described below.

For the positive electrode material of composite sodium ferric sulfate provided by the examples of the present invention, particles of the positive electrode material include a sodium ferric sulfate matrix, a three-dimensional conductive network embedded into the sodium ferric sulfate matrix and a conductive coating layer coated outside the sodium ferric sulfate matrix, wherein the three-dimensional conductive network and the conductive coating layer are both formed from PEDOT.

PEDOT, i.e., polymer of EDOT (3,4-ethylenedioxythiophene monomer), has better electrical conductivity, and embedding the conductive network formed from the PEDOT into the sodium ferric sulfate matrix and coating the PEDOT on the surface of the sodium ferric sulfate matrix can improve the conductivity, capacity and rate of the positive electrode material of sodium ferric sulfate. Moreover, as the PEDOT has better chemical stability and forms the coating layer on the surface of the sodium ferric sulfate, the interface stability of the positive electrode material of sodium ferric sulfate can be improved.

Preferably, in order to ensure that the positive electrode material of composite sodium ferric sulfate has better electrochemical performance, a mass ratio of the sodium ferric sulfate matrix to the PEDOT is 100:1-10 (for example, 100:1, 100:2, 100:3, 100:4, 100:5, 100:6, 100:7, 100:8, 100:9 or 100:10); further preferred ranges are, for example, 100:1-8, 100:1-7, 100:1-6, 100:1-5, 100:1-4, 100:1-3, 100:1-2, 100:2-10, 100:3-10, 100:4-10, 100:5-10, 100:6-10, 100:7-10, 100:8-10, 100:3-7, 100:3-6, 100:3-5, 100:3-4, 100:4-6 or 100:4-5.

The preparation method for a positive electrode material of composite sodium ferric sulfate provided by the examples of the present invention includes:
mixing PSS, EDOT, sodium sulfate, ferrous sulfate and an oxidant as an initiator in an aqueous solution and making the same fully react to render a precursor solution;
drying the precursor solution to render a PEDOT-PSS composite sodium ferric sulfate precursor; and
carrying out heat treatment on the sodium ferric sulfate precursor at 300-450 °C for 6-24 h in an inert atmosphere, to render the positive electrode material of composite sodium ferric sulfate.

EDOT, i.e., 3,4-ethylenedioxythiophene monomer, is polymerized into the PEDOT in the presence of an oxidant. However, as the PEDOT is insoluble in water, if the PEDOT is directly mixed with sodium sulfate and ferrous sulfate, sufficient uniform dispersion cannot be achieved, and finally after the heat treatment, it can only be realized that the PEDOT is coated on the surface of the sodium ferric sulfate, while the three-dimensional conductive network cannot be embedded into sodium ferric sulfate particles. In the present solution, the PSS (sodium polystyrene sulfonate) is introduced, and grafting the PSS to the PEDOT can endow the PEDOT with water solubility, so that the PEDOT can be fully and uniformly dispersed with sodium sulfate and ferrous sulfate in the aqueous solution, and thus it can be realized that particles of the positive electrode material of composite sodium ferric sulfate finally obtained after the heat treatment have the three-dimensional conductive network structure in which the PEDOT is embedded into the sodium ferric sulfate particles, rather than merely coating the PEDOT on the surface of the sodium ferric sulfate particles. During the heat treatment, ionic bonds between the PEDOT and the PSS are broken, and the PSS is partially or completely decomposed, which can also further improve the conductivity of the polymer.

Therefore, the preparation method provided by the present invention can prepare the positive electrode material of composite sodium ferric sulfate, having the PEDOT three-dimensional conductive network embedded into the particles and coated with the PEDOT coating layer on the surface, provided by the examples of the present invention, and this material has better electrochemical performance.

The preparation method specifically is as follows.

### S1, mixing and reacting.

Firstly, the PSS, deionized water and the EDOT are added into a reaction vessel, and fully stirred and uniformly dispersed; and
then, the sodium sulfate, the ferrous sulfate and the oxidant are added into reaction solution, and reaction is carried out under continuous stirring until the solution becomes dark blue or black, which indicates full reaction.

Optionally, the oxidant includes at least one of ferric sulfate, sodium persulfate, ammonium persulfate, hydrogen peroxide and oxygen.

Preferably, the oxidant is iron sulfate and sodium persulfate. The ferric sulfate and sodium persulfate have homogeneity with the sodium ferric sulfate precursor, i.e., ferrous sulfate, a sodium ferric sulfate material of composite conductive polymers is directly synthesized by a one-pot method, thus reducing a purification step, greatly reducing synthesis complexity, and improving atom economy and yield. More preferably, in order to maintain more rapid uniform dispersion of the ferric sulfate, the ferric sulfate is added into the reaction vessel in a form of aqueous solution.

Optionally, a feeding mole ratio of the sodium sulfate to the ferrous sulfate is 1:1.5-2.5 (for example, 1:1.5, 1:2 or 1: 2.5).

Optionally, a feeding mass ratio of the PSS to the EDOT is 10:1-5 (for example, 10:1, 10:2 or 10:5).

More specifically, in order to ensure that the prepared positive electrode material of composite sodium ferric sulfate has better performance, feeding amounts are as follows: a total amount of the PSS and the EDOT is 31-314 parts, the sodium sulfate is 1000 parts, and the ferrous sulfate is 1605-2675 parts, in parts by weight.

Optionally, the oxidant is 1-200 parts.

Optionally, the deionized water is 2500-100000 parts.

The feeding amounts are as follows: for example, the total amount of the PSS and the EDOT is 31 parts, the sodium sulfate is 1000 parts, the ferrous sulfate is 1605 parts, the oxidant is 1 part, and the deionized water is 2500 parts;
alternatively, the total amount of the PSS and the EDOT is 314 parts, the sodium sulfate is 1000 parts, the ferrous sulfate is 2675 parts, the oxidant is 314 part, and the deionized water is 100000 parts;
alternatively, the total amount of the PSS and the EDOT is 80 parts, the sodium sulfate is 1000 parts, the ferrous sulfate is 1800 parts, the oxidant is 50 part, and the deionized water is 10000 parts;
alternatively, the total amount of the PSS and the EDOT is 150 parts, the sodium sulfate is 1000 parts, the ferrous sulfate is 2000 parts, the oxidant is 100 part, and the deionized water is 20000 parts;
alternatively, the total amount of the PSS and the EDOT is 200 parts, the sodium sulfate is 1000 parts, the ferrous sulfate is 2200 parts, the oxidant is 200 part, and the deionized water is 40000 parts; and
alternatively, the total amount of the PSS and the EDOT is 280 parts, the sodium sulfate is 1000 parts, the ferrous sulfate is 2400 parts, the oxidant is 270 part, and the deionized water is 80000 parts.

### S2, drying the precursor solution.

After the drying, a PEDOT-PSS composite sodium ferric sulfate precursor is rendered.

Preferably, a drying method is spray drying. The spray drying is chosen for the purpose of obtaining the sodium ferric sulfate precursor with uniform particle size distribution and good appearance after the spray drying.

### S3, performing heat treatment.

The spray-dried sodium ferric sulfate precursor is subjected to the heat treatment at a temperature of 300-450 °C (for example, 300 °C, 350 °C, 400 °C or 450 °C) for 6-24 h (for example, 6 h, 10 h, 15 h, 18 h, 20 h or 24 h) in an inert-gas atmosphere environment.

The heat treatment makes the sodium ferric sulfate precursor to be converted into sodium ferric sulfate and breaks the ionic bonds between the PEDOT and the PSS, and the PSS is partially or completely decomposed.

Optionally, a process of the heat treatment is performed in a nitrogen or argon atmosphere.

The positive electrode provided by the examples of the present invention is prepared using the positive electrode material provided by the examples of the present invention or the positive electrode material prepared by the preparation method provided by the examples of the present invention.

The sodium-ion battery provided by the examples of the present invention includes the positive electrode provided by the examples of the present invention.

The features and performances of the present invention are further described in detail below in conjunction with the examples.

### Examples 1-5

The examples provide a preparation method for a positive electrode material of composite sodium ferric sulfate, wherein a preparation process was as follows:
adding PSS, deionized water and EDOT into a container, and stirring and dispersing the same uniformly;
adding an aqueous solution of sodium sulfate, ferrous sulfate and a small amount of ferric sulfate into reaction vessel, and making the same react under continuous stirring until solution being dark blue, to render a precursor solution;
performing spray drying on the precursor solution to render a composite sodium ferric sulfate precursor; and
carrying out heat treatment on the precursor in a nitrogen atmosphere to prepare the positive electrode material of PEDOT polymer-based composite sodium ferric sulfate.

Specific parameters were set as shown in following TABLE 1.

**TABLE 1 Specific Parameter Setting in Various Examples**

| Parameter | | Example 1 | Example 2 | Example 3 | Example 4 | Example 5 |
|---|---|---|---|---|---|---|
| Addition amount (parts by weight) | PSS | 150 | 300 | 30 | 15 | 400 |
| | Deionized water | 20000 | 40000 | 20000 | 20000 | 50000 |
| | EDOT | 70 | 140 | 14 | 7 | 150 |
| | Sodium sulfate | 1000 | 1000 | 1000 | 1000 | 1000 |
| | Ferrous sulfate | 2140 | 1926 | 2050 | 2240 | 2140 |
| | Sodium persulfate | 140 | 280 | 28 | 14 | 300 |
| | Ferric sulfate | 2 | 4 | 0.4 | 0.2 | 4 |
| Temperature °C of heat treatment | | 400 | 400 | 350 | 450 | 400 |
| Time h of heat treatment | | 6 | 12 | 6 | 18 | 24 |
| Type of inert atmosphere | | Nitrogen | Nitrogen | Nitrogen | Nitrogen | Nitrogen |

### Comparative Example 1

In the present comparative example, compared with Example 1, the PSS was not added, and after the EDOT, the sodium persulfate and the ferric sulfate were added, the solution rapidly reacted and generated a large amount of precipitates, but a uniformly dispersed solution could not be formed for next spray granulation experiment.

### Comparative Example 2

In the present comparative example, compared with Example 1, the PSS, the EDOT and the oxidant were not added.

### Experimental Example 1

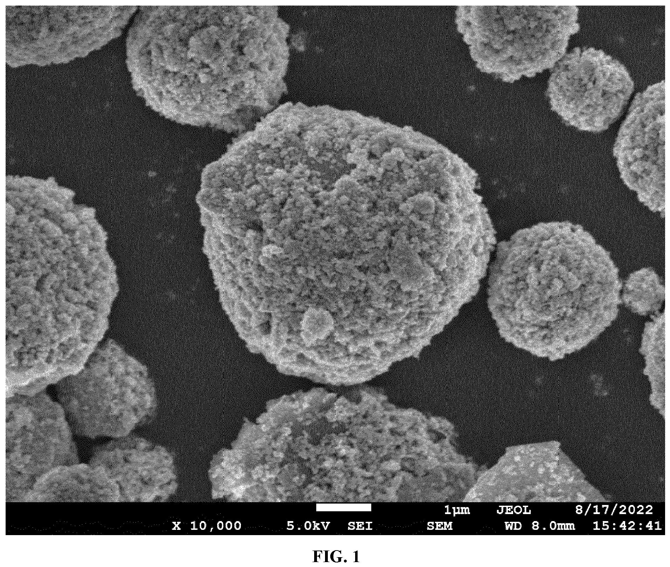

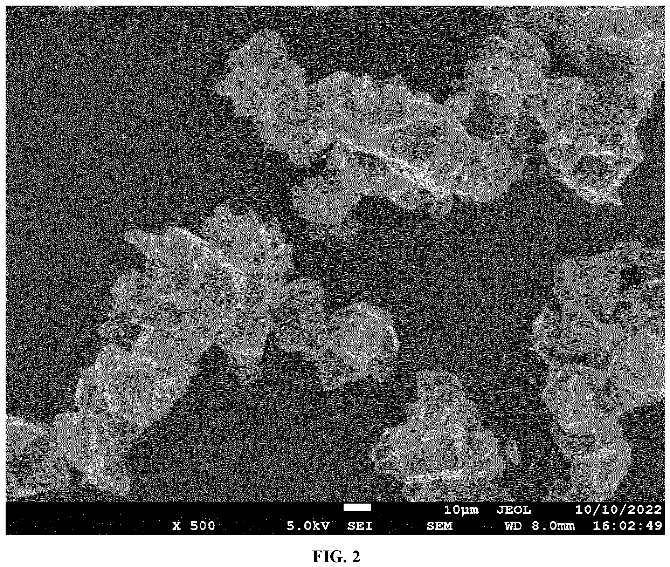

SEM images of particles of the positive electrode materials of composite sodium ferric sulfate obtained in Example 1 and Comparative Example 2 were taken, being FIG. 1 and FIG. 2 respectively. As can be seen from FIG. 1 and FIG. 2, the particles of the positive electrode material of composite sodium ferric sulfate of Example 1 are all of a structure in which a three-dimensional conductive network is embedded into a sodium ferric sulfate matrix and a surface has a coating layer; Comparative Example 2 has neither a structure of a coating layer on a surface nor an embedded conductive network structure, and it is a common positive electrode material of sodium ferric sulfate.

### Experimental Example 2

Conductivity test: 3 g of tapped powder was filled into a mold cavity and vibrated to make sample flat and uniform, 30 Mpa was applied to the mold, and the conductivity of the pressurized powder was tested by four probes.

### Test of performances of sodium-ion full battery:

AZO-doped sodium ferric sulfate prepared in the above examples was taken as a positive electrode material of sodium-ion battery, and formed into a CR2032 type button battery with a metal sodium sheet. In the above, the sodium ferric sulfate, SP and PVDF were homogenized in an NMP solution according to a mass ratio of 9:0.5:0.5, coated on an aluminum foil, and dried to prepare a positive electrode plate. A fresh metal sodium sheet was taken as a negative electrode of the battery. A solution of 1.0 mol/L NaPF6 being dissolved in PC:EMC:FEC=4:6:0.5 was taken as an electrolytic solution. The button type battery was assembled in a glove box filled with argon, and capacity, rate and cycling performance were tested.

Test of battery capacity: the assembled battery was charged to 4.3 V at 0.1 C and then discharged to 2.0 V at 0.1 C.

Test of rate capability of the battery: the assembled battery was charged to 4.3 V at 0.1 C and then discharged to 2.0 V at 2 C.

Test of cycle lifetime: the assembled battery was charged to 4.3 V at 1 C, then discharged to 2.0 V at 1 C, and cycled for 100 times, to record a capacity retention rate.

**TABLE 2 Test Results of Various Examples and Comparative Examples**

| Group | Conductivity S/cm | 0.1 C Capacity (mAh/g) | Capacity Retention Rate at 2 C Rate | Capacity Retention Rate of 100 Cycles |
|---|---|---|---|---|
| Example 1 | 1.3×10⁻⁴ | 84.7 | 84.5% | 95.3% |
| Example 2 | 3.3×10⁻⁴ | 88.5 | 86.3% | 98.1% |
| Example 3 | 7.8×10⁻⁶ | 81.3 | 75.1% | 91.7% |
| Example 4 | 7.3×10⁻⁸ | 72.5 | 56.8% | 78.8% |
| Example 5 | 7.1×10⁻⁴ | 81.3 | 84.8% | 88.1% |
| Comparative Example 1 | / | / | / | / |
| Comparative Example 2 | 5.0×10⁻¹⁵ | 58.9 | 49.2% | 59% |

As can be seen from TABLE 2, the batteries prepared by the positive electrode materials prepared in the various examples of the present invention all have better electrochemical performances. In the above, Examples 1-3 have better performances as feeding ranges are within preferred solutions of the present invention; the feeding amounts of the PSS and EDOT in Example 4 are small, and the performances of the prepared positive electrode materials, such as conductivity and capacity, are inferior to those of Examples 1-3, but still obviously better than those of the positive electrode materials prepared by the comparative examples without adding the PSS and EDOT; the feeding amounts of the PSS and EDOT in Example 5 are large, and the performances of the prepared positive electrode material, such as conductivity and capacity, are inferior to those of Examples 1-3, but are still obviously better than those of the positive electrode materials prepared by the comparative examples without adding the PSS and EDOT.

Comparing Comparative Example 1 with Example 1, as the PSS was not added during the preparation in Comparative Example 1, a polymer formed during oxidation and polymerization of the EDOT directly precipitated out, and cannot be dissolved in an aqueous solution of ferrous sulfate and sodium sulfate, and a uniformly dispersed solution cannot be prepared; therefore, a uniformly mixed mixture of the sodium ferric sulfate precursor and the PEDOT cannot be formed by spray granulation. By comparing Comparative Example 2 with Example 1, no conductive polymer was added in Comparative Example 2, and a final material showed inferior conductivity and battery performances.

In summary, in the positive electrode material of composite sodium ferric sulfate provided by the examples of the present invention, the conductive network formed by the PEDOT is embedded into the sodium ferric sulfate matrix and coated on the surface of the sodium ferric sulfate matrix, which can improve the conductivity, capacity and rate of the positive electrode material of sodium ferric sulfate. Moreover, as PEDOT has better chemical stability, and forms the coating layer on the surface of the sodium ferric sulfate, the interface stability of the positive electrode material of sodium ferric sulfate can be improved.

In the preparation method provided by the examples of the present invention, the PSS (sodium polystyrene sulfonate) is introduced in the preparation process, and the ionic bonds are formed between PSS and PEDOT molecules, so that the solubility of the PEDOT in the aqueous solution is improved, and the PEDOT can be fully and uniformly dispersed with sodium sulfate and ferrous sulfate in the aqueous solution, and thus it can be realized that the particles of the positive electrode material of composite sodium ferric sulfate finally obtained after the heat treatment have the three-dimensional conductive network structure in which the PEDOT is embedded into the sodium ferric sulfate particles. During the heat treatment, sulfonates in the PSS are completely decomposed, so that the ionic bonds between the PEDOT and the PSS disappear, which can also further improve the conductivity of the polymer.

The above are merely for preferred examples of the present invention, and are not intended to limit the present invention. For those skilled in the art, various modifications and changes could be made to the present invention. Any modifications, equivalent substitutions, improvements and the like made within the spirit and principle of the present invention should be covered within the scope of protection of the present invention.

### Industrial Applicability

The present invention provides a positive electrode material of composite sodium ferric sulfate and a preparation method therefor, a positive electrode and a sodium-ion battery. For the positive electrode material of composite sodium ferric sulfate, the particles of the positive electrode material include the sodium ferric sulfate matrix, the three-dimensional conductive network embedded into the sodium ferric sulfate matrix and the conductive coating layer coated outside the sodium ferric sulfate matrix, wherein the three-dimensional conductive network and the conductive coating layer are both formed by PEDOT. For the preparation method for the positive electrode material of composite sodium ferric sulfate, it includes: mixing PSS, EDOT, sodium sulfate, ferrous sulfate and an oxidant as an initiator in an aqueous solution and making the same fully react to render a precursor solution; drying the precursor solution; and carrying out heat treatment to render the positive electrode material of composite sodium ferric sulfate. For the positive electrode, it is prepared using the above positive electrode material. For the sodium-ion battery, it includes the above positive electrode. The positive electrode material has good conductivity, capacity, rate and interface stability.

In addition, it may be understood that the positive electrode material of composite sodium ferric sulfate and the preparation method therefor, the positive electrode and the sodium-ion battery in the present invention are reproducible, and may be applied in various industrial applications. For example, the positive electrode material of composite sodium ferric sulfate and the preparation method therefor, the positive electrode and the sodium-ion battery in the present invention can be used in the technical field of sodium-battery materials.

## Claims

1. A positive electrode material of composite sodium ferric sulfate, **characterized in that** particles of the positive electrode material comprise a sodium ferric sulfate matrix, a three-dimensional conductive network embedded into the sodium ferric sulfate matrix and a conductive coating layer coated outside the sodium ferric sulfate matrix; and the three-dimensional conductive network and the conductive coating layer are both formed from PEDOT.

2. The positive electrode material according to claim 1, wherein a mass ratio of the sodium ferric sulfate matrix to the PEDOT is 100:1-10.

3. A preparation method for a positive electrode material of composite sodium ferric sulfate, **characterized by** comprising:
mixing PSS, EDOT, sodium sulfate, ferrous sulfate and an oxidant as an initiator in an aqueous solution and making s resultant fully react to render a precursor solution;
drying the precursor solution to render a PEDOT-PSS composite sodium ferric sulfate precursor; and
carrying out heat treatment on the sodium ferric sulfate precursor at 300-450 °C for 6-24 h in an inert atmosphere, to render the positive electrode material of composite sodium ferric sulfate.

4. The preparation method according to claim 3, wherein a method of mixing and reacting the PSS, the EDOT, the sodium sulfate, the ferrous sulfate and the oxidant as the initiator comprises:
firstly adding the PSS, deionized water and the EDOT into a reaction vessel, and fully stirring and uniformly dispersing a resultant; and
then adding the sodium sulfate, the ferrous sulfate and the oxidant into a reaction solution, and carrying out reaction under continuous stirring.

5. The preparation method according to claim 3, wherein the oxidant comprises at least one of ferric sulfate, sodium persulfate, ammonium persulfate, hydrogen peroxide and oxygen; and
preferably, the oxidant is iron sulfate and sodium persulfate.

6. The preparation method according to claim 3, wherein a feeding mole ratio of the sodium sulfate to the ferrous sulfate is 1:1.5-2.5; and
optionally, a feeding mass ratio of the PSS to the EDOT is 10:1-5.

7. The preparation method according to claim 6, wherein feeding amounts are as follows: a total amount of the PSS and the EDOT is 31-314 parts, the sodium sulfate is 1000 parts, and the ferrous sulfate is 1605-2675 parts, in parts by weight;
optionally, the oxidant is 1-200 parts; and
optionally, the deionized water is 2500-100000 parts.

8. The preparation method according to claim 3, wherein a drying method is spray drying.

9. A positive electrode, **characterized by** being prepared using the positive electrode material according to claim 1 or 2, or the positive electrode material prepared by the preparation method according to any one of claims 3-8.

10. A sodium-ion battery, **characterized by** comprising the positive electrode according to claim 9.
